# EUROPEAN PATENT APPLICATION

(11) **EP 3 481 077 A1**
(43) Date of publication of application: **08.05.2019**
(21) Application number: 17830205.5
(22) Date of filing: 23.02.2017
(51) Int. Cl.: H04N 21/845, H04N 21/442, H04N 21/61, H04N 21/462

(54) **METHOD, DEVICE, AND TERMINAL FOR DOWNLOADING STREAMING MEDIA FILE FRAGMENT**

(30) Priority: 22.07.2016 CN 201610584207
(71) Applicant: Huawei Technologies Co., Ltd., Longgang District Shenzhen, Guangdong 518129 (CN)
(72) Inventor: PENG, Feng, Shenzhen Guangdong 518129 (CN)
(74) Representative: Maiwald Patent- und Rechtsanwaltsgesellschaft mbH
(86) International application number: PCT/CN2017/074597
(87) International publication number: WO 2018/014557

(57) **Abstract**

This application provides a method and an apparatus for downloading a streaming media file fragment and a terminal. The method includes: determining a length of a to-be-downloaded streaming media file fragment; splitting the to-be-downloaded streaming media file fragment into at least two subfragments when the length of the to-be-downloaded streaming media file fragment is greater than a preset length, where a length of each subfragment is not greater than the preset length; and separately downloading each subfragment. The to-be-downloaded streaming media file fragment is split based on the preset length and the subfragments obtained after splitting are downloaded in parallel when a network environment is relatively poor and the to-be-downloaded streaming media file fragment is relatively long. Because the subfragments obtained after splitting are relatively short, the subfragments can be downloaded faster than the to-be-downloaded streaming media file fragment before splitting. In addition, the plurality of subfragments are separately downloaded, so that downloading efficiency of the entire streaming media file fragment is improved.

## Description

### TECHNICAL FIELD

This application relates to the field of streaming media technologies, and in particular, to a method and an apparatus for downloading a streaming media file fragment and a terminal.

### BACKGROUND

A streaming media file is a file form that implements transmission by using a streaming media transmission technology. A conventional streaming media file includes a plurality of fragments. Different from common playback-after-download, playback of the streaming media file is in a unit of fragments, that is, the streaming media file can be played after one fragment is downloaded and not after all fragments are downloaded. Therefore, already downloaded fragments are being played while other to-be-played fragments are being downloaded.

When downloading a streaming media file, a terminal generates a streaming media file fragment list based on the to-be-downloaded streaming media file. The streaming media file fragment list includes fragment addresses and a sequence of the fragment addresses. An address of a to-be-downloaded fragment is determined first based on the fragment address sequence, and an indicated server is linked to by using the address of the to-be-downloaded fragment after the address is determined. Because information in the address includes information about the to-be-downloaded fragment, the to-be-downloaded fragment can be accurately found based on the information about the fragment. Then, the fragment is downloaded. The terminal decodes and plays the fragment after the fragment is downloaded, and starts to download a next fragment at the same time.

Because playback of the streaming media is in the unit of fragments, the terminal can decode and play a fragment only after the entire fragment is downloaded. However, in an actual fragment downloading process, quality of a network between the terminal and the server varies as time goes by during transmission. When a fragment is downloaded based on a fragment address indicated in the streaming media file fragment list, if the fragment is relatively large and the network environment between the server and the terminal is relatively poor, the relatively large fragment needs a relatively long downloading time. Consequently, already downloaded fragments are decoded and played while downloading of to-be-played fragments is not completed, leading to a problem of freeze during playback or the like.

### SUMMARY

This application provides a method and an apparatus for downloading a streaming media file fragment and a terminal, so as to improve downloading efficiency of the streaming media file fragment when the streaming media file fragment is relatively large and a network environment is relatively poor.

According to a first aspect, this application provides a method for downloading a streaming media file fragment, including: determining a length of a to-be-downloaded streaming media file fragment; splitting the to-be-downloaded streaming media file fragment into at least two subfragments when the length of the to-be-downloaded streaming media file fragment is greater than a preset length, where a length of each subfragment is not greater than the preset length; and separately downloading each subfragment. Because the subfragments obtained after splitting are relatively short, less time is required to download one subfragment, and the subfragments may be separately downloaded, the subfragments can be downloaded faster than the streaming media file fragment before splitting.

With reference to the implementation of the first aspect, in a first possible implementation of the first aspect, the determining a length of a to-be-downloaded streaming media file fragment includes: sending a fragment download request to a server; and receiving feedback information returned from the server, where the feedback information includes the length of the to-be-downloaded streaming media file fragment. By sending the fragment download request and obtaining information about the length of the fragment returned from the server, and by determining whether splitting needs to be performed after comparing the length of the fragment with the preset length, fast downloading of the fragment is implemented.

With reference to the first possible implementation of the first aspect, in a second possible implementation of the first aspect, the preset length matches a transmission bandwidth between a terminal and the server. The preset length is set based on the transmission bandwidth between the terminal and the server, thereby ensuring smooth downloading of the streaming media file subfragments.

With reference to the second possible implementation of the first aspect, in a third possible implementation of the first aspect, the splitting the to-be-downloaded streaming media file fragment into at least two subfragments includes: determining a maximum length of the subfragment; determining a field range of the to-be-downloaded streaming media file fragment; and dividing the field range into at least two subranges, where a length of each subrange is not greater than the maximum length. Because the preset length is set based on the current transmission bandwidth between the terminal and the server, the length of the subfragment is set to be not greater than the preset length, thereby ensuring smooth downloading of the fragment with the current transmission bandwidth.

With reference to the third possible implementation of the first aspect, in a fourth possible implementation of the first aspect, the dividing the field range into at least two subranges includes: dividing the field range into at least a first subrange and a second subrange, where the first subrange corresponds to a field range of the to-be-downloaded streaming media file fragment that is to be played first, and a field length of the first subrange is less than a field length of the second subrange. In this way, it can be ensured that when different threads are run at the same time for downloading, a field range of the to-be-downloaded streaming media file fragment that needs to be downloaded first can be downloaded as preferentially as possible.

With reference to the third possible implementation of the first aspect, in a fifth possible implementation of the first aspect, the separately downloading each subfragment includes: generating subfragment download requests, where each download request corresponds to a subrange and includes a download address of the to-be-downloaded streaming media file fragment and the subrange corresponding to the download request; sending the subfragment download requests; and receiving subfragments returned from the server based on the subfragment download requests. Each download request corresponds to a subrange, so that different download requests implement downloading of different ranges of the to-be-downloaded fragment. In addition, because the different ranges are separately downloaded, downloading efficiency of the to-be-downloaded streaming media file fragment is ensured.

With reference to the fifth possible implementation of the first aspect, in a sixth possible implementation of the first aspect, the sending the subfragment download requests includes: sending the download requests in parallel. The download requests are sent in parallel, to request to download the plurality of subfragments at the same time, so that the to-be-downloaded streaming media file fragment can be downloaded faster.

With reference to the implementation of the first aspect, in a seventh possible implementation of the first aspect, the method further includes: obtaining an address of a second streaming media file fragment, where the second streaming media file fragment is a next streaming media file fragment of the to-be-downloaded streaming media file fragment; determining, based on the address of the second streaming media file fragment, a server on which the second streaming media file fragment is located; and if the server on which the second streaming media file fragment is located is different from that on which the to-be-downloaded streaming media file fragment is located, requesting to download the second streaming media file fragment. If continuing to request downloading, after completing the download request of the to-be-downloaded streaming media file fragment, the terminal continues to send the download request of the second streaming media file fragment located on the different server. In this way, parallel downloading of a plurality of streaming media file fragments is implemented, and a probability of freeze during subsequent playback of the streaming media file fragments by the terminal is reduced.

With reference to any one of the first aspect, or the first to the seventh possible implementations of the first aspect, the method further includes: collecting statistics on the transmission bandwidth between the terminal downloading the to-be-downloaded streaming media file fragment and the server after the to-be-downloaded streaming media file fragment is downloaded; and determining a second preset length based on the transmission bandwidth. After the to-be-downloaded streaming media file fragment is downloaded, statistics on the transmission bandwidth between the terminal and the server are collected, and a preset splitting length corresponding to a next to-be-downloaded streaming media file fragment is determined, thereby ensuring, as much as possible, fast downloading of the next streaming media file fragment and implementing smooth playback in the terminal.

According to a second aspect, this application further provides an apparatus for downloading a streaming media file fragment, including: a determining unit, configured to determine a length of a to-be-downloaded streaming media file fragment; a processing unit, configured to split the to-be-downloaded streaming media file fragment into at least two subfragments when the length of the to-be-downloaded streaming media file fragment is greater than a preset length matching a transmission bandwidth between a terminal and a server, where a length of each subfragment is not greater than the preset length; and a download unit, configured to separately download each subfragment. Because the subfragments obtained after splitting by the processing unit are relatively short, less time is required to download one subfragment, and the subfragments are separately downloaded by the download unit, the subfragments can be downloaded faster than the streaming media file fragment before splitting.

With reference to the implementation of the second aspect, in a first possible implementation of the second aspect, the determining unit includes: a sending subunit, configured to send a fragment download request to the server; and a receiving subunit, configured to receive feedback information returned from the server, where the feedback information includes the length of the to-be-downloaded streaming media file fragment. The sending subunit sends the fragment download request, and the receiving subunit receives information about the length of the fragment returned from the server, so that the length of the to-be-downloaded streaming media file fragment is quickly obtained.

With reference to the first possible implementation of the second aspect, in a second possible implementation of the second aspect, the processing unit includes: a first determining subunit, configured to determine a maximum length of the sub fragment; a second determining subunit, configured to determine a field range of the to-be-downloaded streaming media file fragment; and a division subunit, configured to divide the field range into at least two subranges, where a length of each subrange is not greater than the maximum length.

With reference to the second possible implementation of the second aspect, in a third possible implementation of the second aspect, the download unit includes: a request generating subunit, configured to generate subfragment download requests, where each download request corresponds to a subrange and includes a download address of the to-be-downloaded streaming media file fragment and the subrange corresponding to the download request; a request sending subunit, configured to send the subfragment download requests; and a fragment receiving subunit, configured to receive subfragments returned from the server based on the subfragment download requests. Each download request generated by the request generating subunit corresponds to a subrange, so that different download requests sent by the request sending subunit implement downloading of different ranges of the to-be-downloaded fragment. In addition, because the different ranges are separately downloaded, downloading efficiency of the to-be-downloaded streaming media file fragment is ensured.

With reference to the third possible implementation of the second aspect, in a fourth possible implementation of the second aspect, the request sending subunit is configured to send the download requests in parallel. The download requests are sent in parallel, to request to download the plurality of subfragments at the same time, so that the to-be-downloaded streaming media file fragment can be downloaded faster.

With reference to the implementation of the second aspect, in a fifth possible implementation of the second aspect, the apparatus further includes: an obtaining unit and a second determining unit.

The obtaining unit is configured to obtain an address of a second streaming media file fragment, where the second streaming media file fragment is a next streaming media file fragment of the to-be-downloaded streaming media file fragment. The second determining unit is configured to determine, based on the address of the second streaming media file fragment, a server on which the second streaming media file fragment is located. The download unit is configured to: if the server on which the second streaming media file fragment is located is different from that on which the to-be-downloaded streaming media file fragment is located, request to download the second streaming media file fragment. If the terminal continues to request downloading, after completing the download request of the to-be-downloaded streaming media file fragment, the obtaining unit continues to send the download request of the second streaming media file fragment located on the different server. In this way, parallel downloading of a plurality of streaming media file fragments is implemented, and a probability of freeze during subsequent playback of the streaming media file fragments by the terminal is reduced.

With reference to any one of the second aspect, or the first to the fifth possible implementations of the first aspect, the apparatus further includes: a statistics collecting unit and a setting unit. The statistics collecting unit is configured to collect statistics on the transmission bandwidth between the terminal downloading the to-be-downloaded streaming media file fragment and the server after the to-be-downloaded streaming media file fragment is downloaded. The setting unit determines a second preset length based on the transmission bandwidth. After the to-be-downloaded streaming media file fragment is downloaded, the statistics collecting unit collects statistics on the transmission bandwidth between the terminal and the server, and the setting unit determines a preset splitting length corresponding to a next to-be-downloaded streaming media file fragment, thereby ensuring, as much as possible, fast downloading of the next streaming media file fragment and implementing smooth playback in the terminal.

According to a third aspect, this application further provides a terminal, including: a processor, a communications interface and a memory, where the processor, the communications interface and the memory are connected by using a communications bus; the processor is configured to determine a length of a to-be-downloaded streaming media file fragment; the processor is further configured to split the to-be-downloaded streaming media file fragment into at least two subfragments when the length of the to-be-downloaded streaming media file fragment is greater than a preset length matching a transmission bandwidth between the terminal and a server; the communications interface is configured to: receive each sub fragment returned from the server end, and transmit the subfragment to the processor by using the communications bus; and the memory is configured to store the subfragment received by the communications interface.

It should be understood that the foregoing general descriptions and the following detailed descriptions are merely for illustration and explanatory purposes, and are not intended to limit this application.

### BRIEF DESCRIPTION OF DRAWINGS

To describe the technical solutions in this application more clearly, the following briefly describes the accompanying drawings required for describing the embodiments. Apparently, a person of ordinary skill in the art may still derive other drawings from these accompanying drawings without creative efforts.
FIG. 1 is a schematic flowchart of an embodiment of a method for downloading a streaming media file fragment according to this application;
FIG. 2 is a schematic diagram of an embodiment of field division of a to-be-downloaded streaming media file fragment according to this application;
FIG. 3 is a schematic diagram of another embodiment of field division of a to-be-downloaded streaming media file fragment according to this application;
FIG. 4 is a schematic diagram of a third embodiment of field division of a to-be-downloaded streaming media file fragment according to this application;
FIG. 5 is a schematic diagram of an embodiment of requesting to download a to-be-downloaded streaming media file fragment according to this application;
FIG. 6 is a schematic diagram of an embodiment of requesting to download a plurality of streaming media file fragments from a same server according to this application;
FIG. 7 is a schematic diagram of an embodiment of requesting to download a plurality of streaming media file fragments from different servers according to this application;
FIG. 8 is a schematic diagram of an embodiment of an apparatus for downloading a streaming media file fragment according to this application; and
FIG. 9 is a schematic diagram of an embodiment of a terminal according to this application.

### DESCRIPTION OF EMBODIMENTS

Exemplary embodiments are described in detail herein, and examples of the exemplary embodiments are shown in the accompanying drawings. When the following descriptions are made with reference to the accompanying drawings, unless indicated otherwise, same numbers in different accompanying drawings represent same or similar elements. The following implementations described in the exemplary embodiments do not necessarily represent all implementations that are consistent with this application. On the contrary, the implementations are merely examples of apparatuses and methods that are described in detail in the appended claims and that are consistent with some aspects of this application.

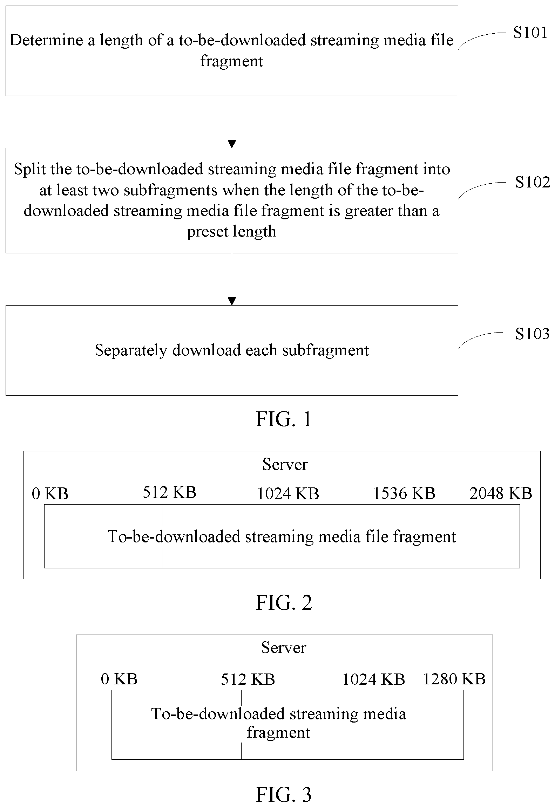

FIG. 1 is a schematic flowchart of a method for downloading a streaming media file fragment according to an example of embodiments. The method includes the following steps.

S101: Determine a length of a to-be-downloaded streaming media file fragment.

Fragment addresses are obtained from a streaming media file fragment list, and streaming media file fragments are sequentially downloaded based on a sequence of the fragment addresses. The to-be-downloaded streaming media file fragment is determined first. Assuming that no streaming media file fragment is downloaded at a previous moment, a streaming media file fragment corresponding to a first fragment address is downloaded based on the sequence of the addresses in the streaming media file fragment list. In this case, the streaming media file fragment corresponding to the first fragment address is the to-be-downloaded streaming media file fragment. Likewise, if streaming media file fragments corresponding to n-1 fragment addresses are downloaded at a previous moment, a streaming media file fragment corresponding to an n^{th} fragment address needs to be downloaded at a next moment. Therefore, the streaming media file fragment corresponding to the n^{th} fragment address is the to-be-downloaded streaming media file fragment.

A corresponding server is linked to based on the download address of the determined to-be-downloaded streaming media file fragment, and a fragment download request is sent. The download request includes identification information of the to-be-downloaded streaming media file fragment. After receiving the fragment download request, the server finds a corresponding streaming media file fragment based on the identification information included in the download request, and then returns feedback information to a terminal sending the download request. The feedback information includes a length of the streaming media file fragment corresponding to the first fragment address. The terminal parses the feedback information after receiving the feedback information returned from the server, to obtain the length of the to-be-downloaded streaming media file fragment.

S102: Split the to-be-downloaded streaming media file fragment into at least two subfragments when the length of the to-be-downloaded streaming media file fragment is greater than a preset length.

After obtaining the length of the to-be-downloaded streaming media file fragment, the terminal compares the length of the to-be-downloaded streaming media file fragment with a preset length. When the length of the to-be-downloaded streaming media file fragment is greater than the preset length, the to-be-downloaded streaming media file fragment is split into at least two subfragments. The preset length is set based on a transmission bandwidth between the terminal and the server, and the preset length varies as the transmission bandwidth varies. It is assumed that the transmission bandwidth is Q1 at a moment, the preset length is L1 based on Q1; the transmission bandwidth is Q2 at a next moment, where Q2 is less than Q1. In this case, the preset length needs to be adjusted to L2, where L2 is less than L1. That is, the preset length is directly proportional to the transmission bandwidth.

For example, the transmission bandwidth between the terminal and the server is 10 M, four threads are run between the terminal and the server at the same time for downloading, and each download thread can obtain a 1 M-to-2 M download bandwidth. Assuming that a streaming media file having a length of 512 K can be smoothly downloaded with the 1 M-to-2 M download bandwidth, the preset length may be set to 512 K. When the transmission bandwidth between the terminal and the server is 4 M, four threads are still run at the same time for downloading, and a download bandwidth of each download thread may be less than 1 M. In this case, download blocking may be caused if the preset length is still set to 512 K. Therefore, the preset length may be set to 256 K or less than 256 K, to ensure smoothness of multithread downloading. Certainly, the foregoing data of the preset length corresponding to different bandwidths is merely an example. During actual implementation, setting of the preset length may further consider historical data in an actual downloading process, and an optimal preset length value is obtained based on a current network environment.

It should be noted that, in this embodiment, the splitting of the to-be-downloaded streaming media file fragment into at least two subfragments is not physical splitting. Instead, a field range of the to-be-downloaded streaming media file fragment is divided into several subranges based on the length of the to-be-downloaded streaming media file fragment and the preset length. A maximum length of the subfragment is determined first. The maximum length is not greater than the preset length. Then, the field range of the to-be-downloaded streaming media file fragment is determined, and the field range of the to-be-downloaded streaming media file fragment is divided based on the determined maximum length.

As shown in FIG. 2, it is assumed that the length of the to-be-downloaded streaming media file fragment is 2 MB, and the preset length that is set based on the transmission bandwidth between the terminal and the server at a current moment is 512 KB. Therefore, the maximum length of the subfragment may be set to 512 KB. In this way, the field range of the to-be-downloaded streaming media file fragment is divided into four subranges, and the four subranges are (0 KB, 512 KB], (512 KB, 1024 KB], (1024 KB, 1536 KB], and (1536 KB, 2048 KB], respectively.

Certainly, in the foregoing embodiment, the length of the to-be-downloaded streaming media file fragment is a multiple of the preset length. Referring to FIG. 3, assuming that the length of the to-be-downloaded streaming media file fragment is 1.25 MB and the preset length is still 512 KB, the maximum length of the subfragment may also be set to 512 KB. The field range of the to-be-downloaded streaming media file fragment is divided into three subranges, and the three subranges are (0 KB, 512 KB], (512 KB, 1024 KB], and (1024 KB, 1280 KB], respectively. It can be learned that field lengths of the three subranges are 512 KB, 512 KB, and 256 KB, respectively.

If downloading of subfragments of the foregoing three field ranges is separately requested and each download thread has a same download speed, downloading of a third subfragment will be preferentially completed. However, the terminal plays the streaming media file fragments according to the original sequence of the fragments. To ensure that a field range of the to-be-downloaded streaming media file fragment that needs to be preferentially played is downloaded first, the first of the three subranges may be set to be relatively short. In the foregoing description, only the case in which the three threads have a same download speed is considered. During actual implementation, the download speed may fluctuate with time. This problem can be resolved by ensuring that the field length of each fragment is not greater than the preset length.

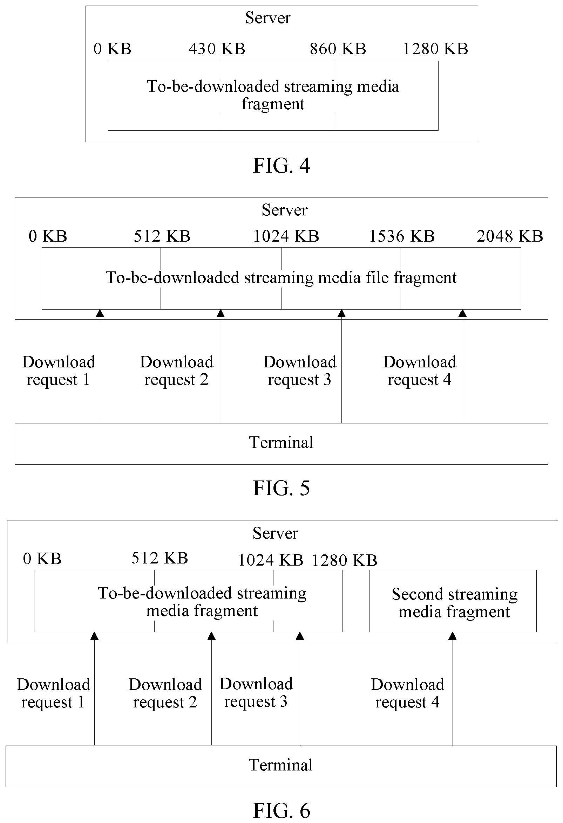

Certainly, the maximum length of the subfragment may also be adjusted. The maximum length is set to 430 KB. In this case, if the to-be-downloaded streaming media file fragment is split into three field ranges, as shown in FIG. 4, the three subranges may be (0 KB, 430 KB], (430 KB, 860 KB], and (860 KB, 1280 KB], respectively. In this case, lengths of the three subranges are respectively 430 KB, 430 KB, and 420 KB. Certainly, the foregoing setting of the maximum length is merely an example, and the length is not limited to the specified length.

After the field range of the to-be-downloaded streaming media file fragment is divided, a subfragment corresponding to a field range of a file header of the to-be-downloaded streaming media file fragment carries information such as a format and a coding manner of the to-be-downloaded streaming media file fragment, and a total length of the field of the streaming media file fragment. After requested downloading of the subfragment is completed, the subfragment is sent to a decoder of the terminal for decoding and playback. Subfragments subsequently downloaded are sent, in series, to the decoder of the terminal according to an original sequence of the field ranges for direct decoding, thereby implementing playback of the entire to-be-downloaded streaming media file fragment. Therefore, it is possible to ensure that each of the subfragments downloaded in segments is normally decoded and played with no need to perform identification processing on the subfragments again.

Using the to-be-downloaded streaming media file fragment in FIG. 2 as an example, field ranges corresponding to four subfragments are (0 KB, 512 KB], (512 KB, 1024 KB], (1024 KB, 1536 KB], and (1536 KB, 2048 KB], respectively. A subfragment corresponding to the field range (0 KB, 512 KB] is a file header of the to-be-downloaded streaming media file, and the subfragment carries information such as a format and a coding manner of the to-be-downloaded streaming media file fragment, and a total length of the field of the streaming media file fragment. The subfragment corresponding to the field range of (0 KB, 512 KB] is sent to the decoder of the terminal to be decoded and played after being downloaded, and three subfragments corresponding to the field ranges of (512 KB, 1024 KB], (1024 KB, 1536 KB], and (1536 KB, 2048 KB] are sent, in series, to the decoder of the terminal to be decoded and played after being downloaded. Information such as data formats of data in and coding manners of the three subfragments are already learned by the decoder from the subfragment corresponding to (0 KB, 512 KB]. Therefore, the three subfragments can be directly decoded, until data in the last field range is decoded and played. The terminal determines, based on the total length of the field of the streaming media file fragment that is learned in advance, that playback of the streaming media file fragment is completed.

S103: Separately download each subfragment.

Subfragment download requests are generated based on the plurality of subranges into which the to-be-downloaded streaming media file fragment is split in step S102. Each subfragment download request corresponds to a subrange. The subfragment download request includes a download address of the to-be-downloaded streaming media file fragment and the subrange corresponding to the current download request.

A corresponding server is linked to based on the download address of the to-be-downloaded streaming media file fragment in the subfragment download request, and the subfragment download request is sent to the server. After receiving the subfragment download request, the server returns, based on a field range of the to-be-downloaded streaming media file fragment in the subfragment download request, a subfragment corresponding to the field range. The terminal receives and downloads the subfragment returned from the server. The terminal sends subfragment download requests to the server in parallel, that is, applies for downloading of a plurality of subfragments at the same time.

It is assumed that the terminal may request to download four subfragments at the same time, using step S102 as an example, the length of the to-be-downloaded streaming media file fragment is 2 MB, and the preset length of the transmission bandwidth between the terminal and the server at the current moment is set to 512 KB. The maximum length of the subfragment is set to 512 KB, so that the field range of the to-be-downloaded streaming media file fragment is divided into four subranges, and the four subranges are (0 KB, 512 KB], (512 KB, 1024 KB], (1024 KB, 1536 KB], and (1536 KB, 2048 KB], respectively. Assuming that the address of the to-be-downloaded streaming media file fragment is URL1, addresses in four subfragment download requests sent by the terminal at the same time are the same and are all URL1. Field ranges of the subfragments corresponding to the four subfragment download requests are different, that is, the four subfragment download requests respectively request different field ranges of the to-be-downloaded streaming media file fragment. It is assumed that the four parallel subfragment download requests are named a download request 1, a download request 2, a download request 3, and a download request 4, and the four subfragment download requests are concurrent instead of being sequential. As shown in FIG. 5, if the download request 1 requests the field range of (0 KB, 512 KB] of the to-be-downloaded streaming media file fragment, the field range of the subfragment returned from the server to the download request 1 is data of a fragment of the field range of (0 KB, 512 KB] of the to-be-downloaded streaming media file fragment. Correspondingly, the download request 2 to the download request 4 may sequentially request the field ranges of (512 KB, 1024 KB], (1024 KB, 1536 KB], and (1536 KB, 2048 KB] of the to-be-downloaded streaming media file fragment. Certainly, the foregoing embodiment is merely an example, and the download request 1 may request any one of the foregoing four different subranges. Details are not described herein.

Likewise, it is assumed that the terminal may download four subfragments at a time. If as shown in the another case in step S102, the length of the to-be-downloaded streaming media file fragment is 1.25 MB, the maximum length of the subfragment is set to 512 KB, and the field range of the to-be-downloaded streaming media file fragment is divided into three subranges. In this case, downloading of the to-be-downloaded streaming media file fragment can be completed by sending only three subfragment download requests. However, if only one subfragment download request is sent, resources between the terminal and the server may be wasted. As shown in FIG. 6, the terminal may further send a download request of a second streaming media file fragment while sending the three subfragment download requests.

The second streaming media file fragment is a streaming media file fragment corresponding to a next fragment address of the address of the to-be-downloaded streaming media file fragment in the fragment list. Two cases may occur in this case. If received feedback information indicates that the second streaming media file fragment is not greater than the preset length after the terminal sends a request for the second streaming media file fragment to the server, the terminal may directly send the download request of the second streaming media file fragment, and download the second streaming media file fragment and the three subfragments of the to-be-downloaded streaming media file fragment at the same time. If the second streaming media file fragment is greater than the preset length, the second streaming media file fragment is split according to the method in step S102, and downloading of a corresponding field range is requested. For details, refer to the descriptions in step S102. Details are not described herein again.

It can be learned from the foregoing technical solution that, according to the method for downloading a streaming media file fragment provided in this embodiment of this application, the preset length is determined based on the transmission bandwidth between the terminal and the server. The to-be-downloaded streaming media file fragment is split based on the preset length when the length of the to-be-downloaded streaming media file fragment is greater than the preset length. Specifically, the field range of the to-be-downloaded streaming media file fragment is divided into a plurality of subranges, and downloading of the plurality of subranges is then requested in parallel. Because the subfragments corresponding to the subranges are relatively short, the subfragments can be downloaded faster than the streaming media file fragment before splitting. In addition, the plurality of subfragments are separately downloaded, thereby improving downloading efficiency of the entire streaming media file fragment.

A streaming media video file includes a plurality of streaming media file fragments, and different streaming media file fragments may be located on different servers. Therefore, the second streaming media file fragment may be located on a server different from that on which the to-be-downloaded streaming media file fragment is located. Because the preset length is set based on the transmission bandwidth between the terminal and the server, if the second streaming media file fragment is located on a different server, a third preset length between the terminal and the server on which the second streaming media file fragment is located may be different from the preset length.

Still using step S102 as an example, the preset length is set to 512 KB based on the transmission bandwidth between the terminal and the server on which the to-be-downloaded streaming media file fragment is located. If the transmission bandwidth between the terminal and the server on which the second streaming media file fragment is located is twice as much as the transmission bandwidth between the terminal and the server on which the to-be-downloaded streaming media file fragment is located, the third preset length may be set to 1 MB.

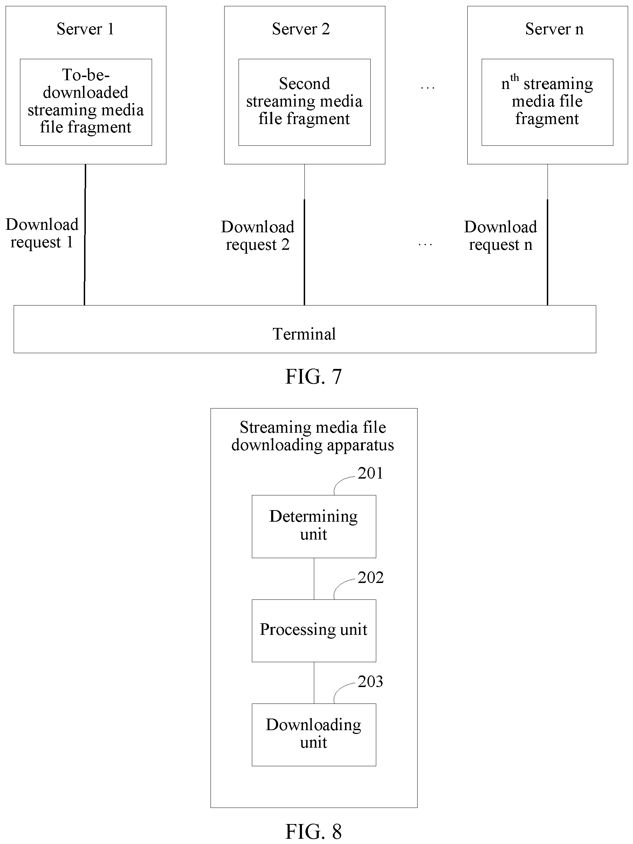

As shown in FIG. 7, when n successive streaming media file fragment addresses in the streaming media file fragment list all correspond to different servers, and streaming media file fragments corresponding to the n streaming media file fragment addresses each are not greater than a corresponding preset length, the terminal sends a download request to download the n streaming media file fragments at the same time.

It can be learned from the foregoing technical solution that when the different streaming media file fragments are located on different servers, because transmission bandwidths between the terminal and the different servers are different, preset splitting lengths corresponding to streaming media file fragments downloaded by the terminal from the different servers are different. In addition, when lengths of the streaming media file fragments located on different servers are not greater than the corresponding preset lengths, the terminal may send streaming media file fragment download requests to a plurality of servers. In this way, a plurality of streaming media file fragments are downloaded, ensuring that decoding and playback of the streaming media file fragments by the terminal are smoother than those implemented in a traditional manner.

After downloading of the to-be-downloaded streaming media file fragment is completed, statistics on the transmission bandwidth between the terminal downloading the to-be-downloaded streaming media file fragment and the server are further collected, and a second preset length is determined based on the transmission bandwidth.

It is assumed that the preset length is set to 512 KB in step S102 based on a current transmission bandwidth between the terminal and the server when the to-be-downloaded streaming media file fragment is downloaded. After the to-be-downloaded streaming media file fragment is downloaded, statistics on the transmission bandwidth between the terminal and the server are recollected. If the transmission bandwidth is greater than that before downloading is performed, the second preset length may be set to be larger and is specifically set depending on an actual bandwidth. If the transmission bandwidth is smaller than that before downloading is performed, a value of the preset length is reduced based on the current transmission bandwidth. Certainly, the foregoing embodiment is merely an example for description. For example, the terminal may send a plurality of streaming media file fragment at the same time, and is not limited to sending four download requests at a time as described in the foregoing embodiment. It should be noted that, the foregoing method for downloading a streaming media file fragment is applicable to a network adaptive streaming media protocol (fragment-based), such as HLS or DASH, and is also applicable to a common progressive download streaming media protocol, such as the HTTP protocol. Details are not described herein.

Corresponding to the foregoing method embodiment, this application further discloses an apparatus for downloading a streaming media file fragment. As shown in FIG. 8, the apparatus includes: a determining unit 201, a processing unit 202, and a download unit 203.

The determining unit 201 is configured to determine a length of a to-be-downloaded streaming media file fragment. The determining unit 201 includes a sending subunit 2011 and a receiving subunit 2012. The sending subunit 2011 sends a fragment download request to a server. After receiving the download request, the server returns feedback information corresponding to the download request to the determining unit 201. The feedback information includes the length of the to-be-downloaded streaming media file fragment. The receiving subunit 2012 receives the feedback information returned from the server.

The processing unit 202 is configured to split the to-be-downloaded streaming media file fragment into at least two subfragments when the length of the to-be-downloaded streaming media file fragment is greater than a preset length matching a transmission bandwidth between a terminal and the server, where a length of each subfragment is not greater than the preset length. The processing unit 202 includes: a first determining subunit 2021, a second determining subunit 2022, and a division subunit 2023.

The first determining subunit 2021 is configured to determine a maximum length of the subfragment. The maximum length is not greater than the preset length. The second determining subunit 2022 is configured to determine a field range of the to-be-downloaded streaming media file fragment. A difference between a field trailer and a field header of the field range of the to-be-downloaded streaming media file fragment is equal to the length of the to-be-downloaded streaming media file fragment. The division subunit 2023 is configured to divide the field range into at least two subranges, where a length of each subrange is not greater than the maximum length.

The download unit 203 is configured to separately download each subfragment. The download unit 203 includes: a request generating subunit 2031, a request sending subunit 2032, and a fragment receiving subunit 2033.

The request generating subunit 2031 is configured to generate subfragment download requests, where each download request corresponds to a subrange and includes a download address of the to-be-downloaded streaming media file fragment and the subrange corresponding to the download request. The request sending subunit 2032 is configured to send the subfragment download requests. Preferably, the request sending subunit sends the subfragment download requests in parallel. The fragment receiving subunit 2033 is configured to receive sub fragments returned from the server based on the subfragment download requests.

The apparatus for downloading a streaming media file fragment further includes an obtaining unit 204 and a second determining unit 205.

The obtaining unit 204 is configured to obtain an address of a second streaming media file fragment, where the second streaming media file fragment is a next streaming media file fragment of the to-be-downloaded streaming media file fragment. The second determining unit 205 is configured to determine, based on the address of the second streaming media file fragment, a server on which the second streaming media file fragment is located. The download unit 203 is configured to: if the server on which the second streaming media file fragment is located is different from that on which the to-be-downloaded streaming media file fragment is located, request to download the second streaming media file fragment.

The apparatus for downloading a streaming media file fragment further includes a statistics collecting unit 206 and a setting unit 207.

The statistics collecting unit 206 is configured to collect statistics on the transmission bandwidth between the terminal downloading the to-be-downloaded streaming media file fragment and the server after the to-be-downloaded streaming media file fragment is downloaded. The setting unit 207 is configured to determine a second preset length based on the transmission bandwidth.

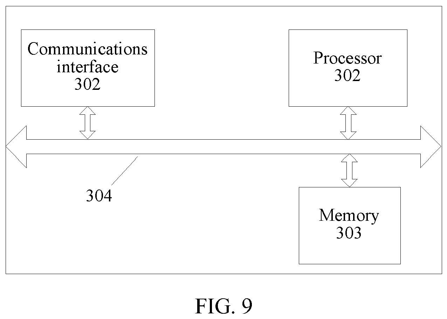

This application further discloses a terminal. As shown in FIG. 9, the terminal includes: a processor 301, a communications interface 302, and a memory 303. The processor 301, the communications interface 302, and the memory 303 are connected by using a communications bus 304.

The processor 301 is configured to: determine a length of a to-be-downloaded streaming media file fragment, and split the to-be-downloaded streaming media file fragment into at least two subfragments when the length of the to-be-downloaded streaming media file fragment is greater than a preset length matching a transmission bandwidth between the terminal and a server. This specifically includes the following steps.

The processor 301 sends a fragment download request to the server and then receives feedback information returned from the server, where the feedback information includes the length of the to-be-downloaded streaming media file fragment, so as to determine the length of the to-be-downloaded streaming media file fragment. The processor 301 determines a maximum length of the subfragment and a field range of the to-be-downloaded streaming media file fragment when the length of the to-be-downloaded streaming media file fragment is greater than the preset length matching the transmission bandwidth between the terminal and the server. The processor 301 divides the field range into at least two subranges, where a length of each subrange is not greater than the maximum length.

After dividing the field range of the to-be-downloaded streaming media file fragment, the processor 301 generates subfragment download requests, where each download request corresponds to a subrange and includes a download address of the to-be-downloaded streaming media file fragment and the subrange corresponding to the download request. Then, the processor 301 sends the subfragment download requests to the server.

The communications interface 302 receives each subfragment returned from the server end and transmits the subfragment to the processor by using the communications bus 304.

The memory 303 is configured to store the subfragment received by the communications interface.

The apparatus or terminal embodiment is described briefly because it is basically similar to the method embodiment. For relevant parts, refer to the description of the method embodiment. It is understandable that this application may be used in many general purpose or dedicated computing system environments or configurations, for example, a personal computer, a server computer, a handheld device or a portable device, a flat panel device, a multi-processor system, a microprocessor-based system, a set-top box, a programmable consumer electronic device, a network PC, a minicomputer, a mainframe computer, and a distributed computing environment including any one of the foregoing systems or devices.

Other implementations of this application will be apparent to a person skilled in the art from consideration of the specification and practice of this application disclosed herein. This application is intended to cover any variations, uses or adaptation of this application. These variations, uses or adaptation follows the general principles of this application, and includes the well-known knowledge and conventional technical means in the art and undisclosed in this application. The specification and the embodiments are considered as merely examples, and the true scope and spirit of this application are pointed out in the following claims.

It should be understood that relational terms such as "first" and "second" are only used to distinguish one entity or operation from another, and do not necessarily require or imply that any actual relationship or sequence exists between these entities or operations. This application is not limited to the precise structures described above and shown in the accompanying drawings, and various modifications and changes can be made without departing from the scope of this application. The scope of this application is limited by the appended claims only.

## Claims

1. A method for downloading a streaming media file fragment, comprising:
determining a length of a to-be-downloaded streaming media file fragment;
splitting the to-be-downloaded streaming media file fragment into at least two subfragments when the length of the to-be-downloaded streaming media file fragment is greater than a preset length, wherein a length of each subfragment is not greater than the preset length; and
separately downloading each subfragment.

2. The method according to claim 1, wherein the determining a length of a to-be-downloaded streaming media file fragment comprises:
sending a fragment download request to a server; and
receiving feedback information returned from the server, wherein the feedback information comprises the length of the to-be-downloaded streaming media file fragment.

3. The method according to claim 2, wherein the preset length matches a transmission bandwidth between a terminal and the server.

4. The method according to claim 3, wherein the splitting the to-be-downloaded streaming media file fragment into at least two subfragments comprises:
determining a maximum length of the subfragment;
determining a field range of the to-be-downloaded streaming media file fragment; and
dividing the field range into at least two subranges, wherein a length of each subrange is not greater than the maximum length.

5. The method according to claim 4, wherein the dividing the field range into at least two subranges comprises:
dividing the field range into at least a first subrange and a second subrange, wherein the first subrange corresponds to a field range of the to-be-downloaded streaming media file fragment that is to be played first, and
a field length of the first subrange is less than a field length of the second subrange.

6. The method according to claim 4, wherein the separately downloading each subfragment comprises:
generating subfragment download requests, wherein each download request corresponds to a subrange and comprises a download address of the to-be-downloaded streaming media file fragment and the subrange corresponding to the download request;
sending the subfragment download requests; and
receiving subfragments returned from the server based on the subfragment download requests.

7. The method according to claim 6, wherein the sending the subfragment download requests comprises: sending the download requests in parallel.

8. The method according to claim 1, further comprising:
obtaining an address of a second streaming media file fragment, wherein the second streaming media file fragment is a next streaming media file fragment of the to-be-downloaded streaming media file fragment;
determining, based on the address of the second streaming media file fragment, a server on which the second streaming media file fragment is located; and
if the server on which the second streaming media file fragment is located is different from that on which the to-be-downloaded streaming media file fragment is located, requesting to download the second streaming media file fragment.

9. The method according to any one of claims 1 to 8, further comprising:
collecting statistics on the transmission bandwidth between the terminal downloading the to-be-downloaded streaming media file fragment and the server after the to-be-downloaded streaming media file fragment is downloaded; and
determining a second preset length based on the transmission bandwidth.

10. An apparatus for downloading a streaming media file fragment, comprising:
a determining unit, configured to determine a length of a to-be-downloaded streaming media file fragment;
a processing unit, configured to split the to-be-downloaded streaming media file fragment into at least two subfragments when the length of the to-be-downloaded streaming media file fragment is greater than a preset length matching a transmission bandwidth between a terminal and a server, wherein a length of each subfragment is not greater than the preset length; and
a download unit, configured to separately download each subfragment.

11. The apparatus according to claim 10, wherein the determining unit comprises:
a sending subunit, configured to send a fragment download request to the server; and
a receiving subunit, configured to receive feedback information returned from the server, wherein the feedback information comprises the length of the to-be-downloaded streaming media file fragment.

12. The apparatus according to claim 11, wherein the processing unit comprises:
a first determining subunit, configured to determine a maximum length of the subfragment;
a second determining subunit, configured to determine a field range of the to-be-downloaded streaming media file fragment; and
a division subunit, configured to divide the field range into at least two subranges, wherein a length of each subrange is not greater than the maximum length.

13. The apparatus according to claim 12, wherein the download unit comprises:
a request generating subunit, configured to generate subfragment download requests, wherein each download request corresponds to a subrange and comprises a download address of the to-be-downloaded streaming media file fragment and the subrange corresponding to the download request;
a request sending subunit, configured to send the subfragment download requests; and
a fragment receiving subunit, configured to receive subfragments returned from the server based on the subfragment download requests.

14. The apparatus according to claim 13, wherein
the request sending subunit is configured to send the subfragment download requests in parallel.

15. The apparatus according to claim 10, further comprising an obtaining unit and a second determining unit, wherein
the obtaining unit is configured to obtain an address of a second streaming media file fragment, wherein the second streaming media file fragment is a next streaming media file fragment of the to-be-downloaded streaming media file fragment;
the second determining unit is configured to determine, based on the address of the second streaming media file fragment, a server on which the second streaming media file fragment is located; and
the download unit is configured to: if the server on which the second streaming media file fragment is located is different from that on which the to-be-downloaded streaming media file fragment is located, request to download the second streaming media file fragment.

16. The apparatus according to any one of claims 10 to 15, further comprising:
a statistics collecting unit, configured to collect statistics on the transmission bandwidth between the terminal downloading the to-be-downloaded streaming media file fragment and the server after the to-be-downloaded streaming media file fragment is downloaded; and
a setting unit, configured to determine a second preset length based on the transmission bandwidth.

17. A terminal, comprising: a processor, a communications interface and a memory, wherein the processor, the communications interface and the memory are connected by using a communications bus;
the processor is configured to determine a length of a to-be-downloaded streaming media file fragment;
the processor is further configured to split the to-be-downloaded streaming media file fragment into at least two subfragments when the length of the to-be-downloaded streaming media file fragment is greater than a preset length matching a transmission bandwidth between the terminal and a server;
the communications interface is configured to: receive each subfragment returned from the server end, and transmit the subfragment to the processor by using the communications bus; and
the memory is configured to store the subfragment received by the communications interface.
